Europäisches Patentamt

European Patent Office

Office européen des brevets

(11) Veröffentlichungsnummer: **0 171 439**
A1

(12) # EUROPÄISCHE PATENTANMELDUNG

(21) Anmeldenummer: 84108275.3

(22) Anmeldetag: 13.07.84

(51) Int. Cl.⁴: **G 01 F 1/30**
**G 01 F 15/02**

(43) Veröffentlichungstag der Anmeldung:
19.02.86 Patentblatt 86/8

(84) Benannte Vertragsstaaten:
AT BE CH DE FR GB IT LI LU NL SE

(71) Anmelder: CARL SCHENCK AG
Landwehrstrasse 55 Postfach 40 18
D-6100 Darmstadt(DE)

(72) Erfinder: Burk, Armin, Ing. grad.
Oberdorf 32
D-6114 Gross-Umstadt-Raibach(DE)

(72) Erfinder: Holland, Hans-J. Dipl.-Ing.
Strohweg 15
D-6100 Darmstadt(DE)

(72) Erfinder: Törner, Ludger, Ing. grad.
Kettlerstrasse 23
D-6116 Eppertshausen(DE)

(74) Vertreter: Brand, Fritz, Dipl.-Ing.
Carl Schenck AG Patentabteilung Landwehrstrasse 55
Postfach 4018
D-6100 Darmstadt(DE)

(54) **Durchlaufmessgerät für einen Schüttgutstrom in einem geschlossenen System.**

(57) Bei einem Durchlaufmeßgerät für einen Schüttgutstrom in einem geschlossenen System, mit einem Führungsgehäuse (1), einer Meßfläche (3) einem Tragelement (4) mit Parallelführung (5), einer Kraftmeßeinrichtung (8), einem Meßgehäuse (10) sowie einer Abdichtung zwischen Führungs- und Meßgehäuse (1, 10) wird eine Membran (20) zur elastischen Verbindung des Tragelements (4) mit dem Meßgehäuse (1) und zur hermetischen Abdichtung des Führungsgehäuses (1) gegenüber dem Meßgehäuse (10) zwischen Tragelement (4) und Meßgehäuse (10) angeordnet und zur Kompensation des auf die Membran (20) und das Tragelement (4) wirkenden Differenzdruckes zwischen Fuhrungs- und Meßgehäuse (1, 10) werden mechanische oder elektrische Mittel (Membran (21) mit Gestänge- und Umlenkelementen (11 - 13) oder Differenzdruckaufnehmer (30)) vorgesehen, die in der Weise auf die Kraftmeßeinrichtung (8) einwirken, daß ein Differenzdruck zwischen Führungs- und Meßgehäuse (1, 10) das Meßsignal der Kraftmeßeinrichtung (8) nicht beeinflußt. Dadurch werden Meßfehler durch Differenzdrücke zwischen Führungs-und Meßgehäuse mit einfachen Mitteln ausgeschaltet.

./...

Fig 1

– 1 –

Durchlaufmeßgerät für einen Schüttgutstrom in einem geschlossenen System

Die Erfindung betrifft ein Durchlaufmeßgerät für einen Schüttgutstrom in einem geschlossenen System, mit einem Führungsgehäuse für den Schüttgutstrom, einer den Schüttgutstrom umlenkenden, innerhalb des Führungsgehäuses in Meßrichtung beweglich angeordneten Meßfläche (Prallplatte, Schurre), einem Tragelement zur Halterung der Meßfläche und zu ihrer Abstützung auf einer Kraftmeßeinrichtung, Führungselementen zur Parallelführung des Tragelements in Meßrichtung, einem mit dem Führungsgehäuse verbundenen Meßgehäuse, in dem die Führungselemente und die Kraftmeßeinrichtung angeordnet sind, sowie einer Abdichtung der Durchführung des Tragelements zwischen Führungs- und Meßgehäuse.

Bei Durchlaufmeßgeräten für einen Schüttgutstrom, die in einem geschlossenen System angeordnet sind, ist im allgemeinen der materialführende Teil, d. h. das Führungsgehäuse mit der Meßfläche vom meßtechnischen Teil räumlich getrennt. Hierbei befinden sich die Parallelführung der Meßfläche sowie die Meßeinrichtung selbst außerhalb des geschlossenen Systems in einem Meßgehäuse. Das Tragelement bzw. die Führungsstange für die Halterung der Meßfläche (Prallplatte, Schurre) muß aus dem geschlossenen System nach außen bzw. in das Meßgehäuse geführt werden.

Die Gestängedurchführung (Durchführung des Tragelements) zum Meßgehäuse wird bei bekannten Vorrichtungen dieser Art mit einer Spaltdichtung versehen und durch Sperrluft freigeblasen. Hierbei wird im Meßgehäuse ein ge-

– 2 –

ringer Überdruck gegenüber dem Führungsgehäuse aufrecht erhalten. Bei einer solchen Anordnung ist jedoch eine besondere Luftversorgung erforderlich. Bei Luftausfall können erhebliche Meßfehler auftreten oder das Gerät kann unbrauchbar werden.

Im Führungs- und im Meßgehäuse können unterschiedliche Drücke auftreten. Bei Druckunterschieden zwischen dem geschlossenen System und dem Meßgehäuse bzw. der Umgebung wirkt auf die Gestängedurchführung eine dem Differenzdruck entsprechende Kraft, die Meßfehler erzeugt.

Weiterhin sind Durchlaufmeßgeräte für einen Schüttgutstrom in einem geschlossenen System bekannt, bei denen die Gestängedurchführung zwischen Führungs- und Meßgehäuse senkrecht zur Meßrichtung erfolgt. Die Gestängedurchführung ist mit einer Membran abgedichtet. Durch Materialanbackungen und Verhärtungen der Membran können bei dieser Anordnung jedoch erhebliche Fehler auftreten. Auch die Gestängeausführung ist kompliziert und aufwendig.

Es ist Aufgabe der vorliegenden Erfindung, ein Durchlaufmeßgerät für einen Schüttgutstrom in einem geschlossenen System zu schaffen, das die Nachteile des Standes der Technik vermeidet und insbesondere keine zusätzliche Luftversorgung benötigt. Diese Aufgabe wird durch die in den Patentansprüchen angegebenen Merkmale gelöst. Die Ansprüche enthalten auch Ausgestaltungen der Erfindung. Die Vorteile der Erfindung ergeben sich im wesentlichen aus der Aufgabenstellung.

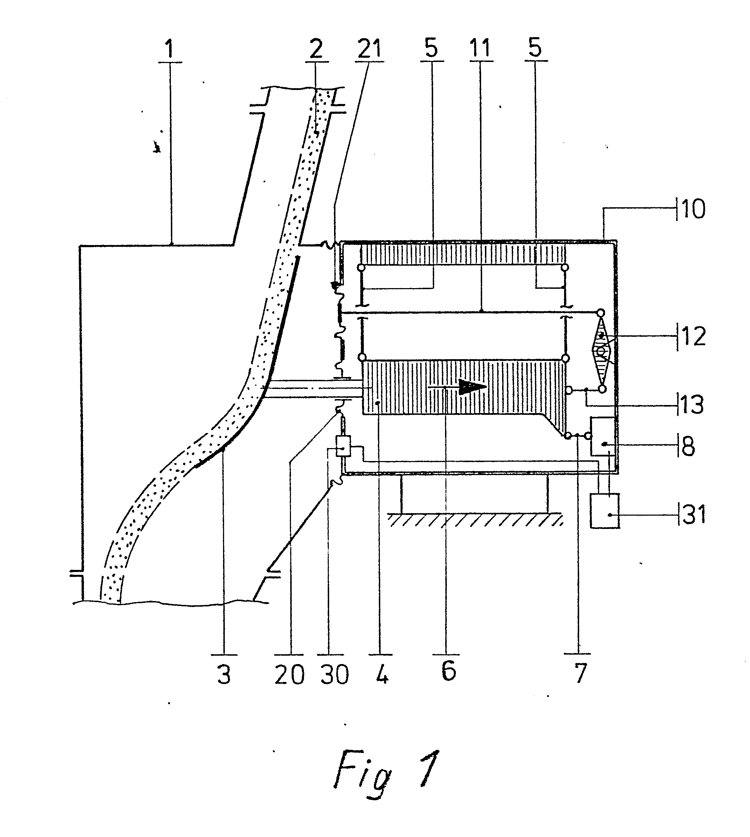

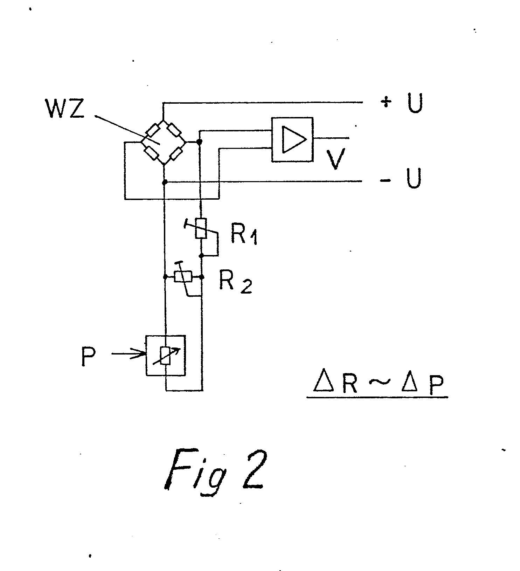

Die Erfindung wird nachstehend an einem Ausführungsbeispiel in der Zeichnung dargestellt und in der Beschreibung näher erläutert. Die Zeichnung zeigt in vereinfachter schematischer Darstellung in Figur 1 ein
Durchlaufmeßgerät in einem geschlossenen System mit
einer mechanischen und alternativ einer elektrischen
Vorrichtung zur Druckkompensation zwischen Führungs-
und Meßgehäuse sowie in Figur 2 eine Schaltungsanordnung zur elektrischen Druckkompensation.

In einem Führungsgehäuse 1 für einen Schüttgutstrom 2
ist eine Meßfläche 3 zur Erfassung der Förderstärke
des durchlaufenden Schüttgutstromes angeordnet. Das
Führungsgehäuse 1 ist in nicht dargestellter Weise mit
weiteren Teilen eines geschlossenen Förder- oder Durchlaufsystems für den Schüttgutstrom verbunden und gegenüber der Umgebung hermetisch abgeschlossen.

Die Meßfläche 3, die auch als Prallplatte oder Schurre
bezeichnet wird, ist im dargestellten Ausführungsbeispiel gekrümmt ausgebildet. Es kann jedoch auch eine
ebene, schräg gestellte Meßfläche vorhanden sein. Die
Meßfläche ist an einem Tragelement 4 befestigt, das
z. B. als Stange o. dgl. ausgebildet sein kann. Am
Tragelement 4 sind in bekannter Weise Führungselemente
5 zur Parallelführung des Tragelements bzw. der Meßfläche 3 in Meßrichtung (Pfeil 6) angeordnet.

Das Tragelement 4 ist in horizontaler Richtung über geeignete Verbindungselemente 7 in bekannter Weise auf
eine Kraftmeßeinrichtung 8 abgestützt. An der Kraftmeßeinrichtung, z. B. einer handelsüblichen Kraftmeßdose
oder Wägezelle, wird die Reaktionskraft des über die Meßfläche geleiteten Schüttgutstromes 2 gemessen. Das Ausgangssignal der Kraftmeßeinrichtung 8 ist ein Maß für die Förderstärke des durch die Einrichtung laufenden Schüttgutstromes und kann z. B. angezeigt oder in beliebiger anderer Weise durch geeignete Vorrichtungen weiterverarbeitet werden.

Am Führungsgehäuse 1 ist ein Meßgehäuse 10 angeordnet, das im wesentlichen die Teile der Meßeinrichtung, wie Tragelement 4, Parallelführungen 5 und Kraftmeßeinrichtung 8 aufnimmt. Zur Durchführung des Tragelements 4 und zur Abdichtung zwischen Führungsgehäuse 1 und Meßgehäuse 10 ist am Tragelement 4 eine Membran 20 vorgesehen. Die Membran erlaubt die horizontale Bewegung des Tragelements 4 bzw. der Meßfläche 3 in Meßrichtung 6.

Zwischen Führungsgehäuse 1 und Meßgehäuse 10 ist eine weitere Membran 21 angeordnet, die über ein Gestänge 11, einen am Meßgehäuse 10 befestigten Umlenkhebel 12 und Verbindungselemente 13 auf das Tragelement 4 wirkt. Der Umlenkhebel 12 kann über geeignete Verbindungselemente auch unmittelbar auf die Kraftmeßeinrichtung 8 wirken. Die durch kleine Kreise gekennzeichneten Verbindungen einzelner Bauteile (z. B. 5, 7, 11 - 13) stellen Gelenke bzw. Gelenkverbindungen bekannter Art dar. Die Membranen sind in bekannter Weise, z. B. durch Verschraubungen, mit den angeschlossenen Bauteilen (4, 10, 11) verbunden.

Die Membran 21 kann den gleichen wirksamen Durchmesser aufweisen wie die Membran 20. Der Umlenkhebel 12 weist in diesem Fall gleich lange Hebelarme auf. Es sind jedoch auch Anordnungen mit unterschiedlich großen Membranen 20/21 möglich. Hierbei sind die Hebelarme des Umlenkhebels 12 entsprechend anzupassen.

Durch die Anordnung der zweiten Membran 21 wird über das Gestänge 11 und den Umlenkhebel 12 sowie die Verbindungselemente 13 an der Kraftmeßeinrichtung 8 eine Ausgleichs- oder Gegenkraft erzeugt, wenn im Führungsgehäuse 1 und im Meßgehäuse 10 unterschiedliche Drücke herrschen. Die Ausgleichskraft bewirkt, daß Druckdifferenzen zwischen Führungs- und Meßgehäuse 1 und 10 das Meßsignal der Kraftmeßeinrichtung nicht beeinflussen. Hierbei können z. B. Differenzdrücke bis 50 mbar ausgeglichen werden.

Die Bauteile 11 - 13 können auch im Führungsgehäuse auf das Tragelement 4 wirkend angeordnet werden.

In der Zeichnung ist noch eine elektrische Variante zur Druckkompensation zwischen Führungs- und Meßgehäuse 1 und 10 dargestellt. Anstelle der Membran 21 mit Gestänge 11, Umlenkhebel 12 usw. kann auch ein Differenzdruckaufnehmer 30 zwischen Führungsgehäuse 1 und Meßgehäuse 10 angeordnet werden. Durch eine geeignete Anpaßschaltung 31 kann hierbei das Ausgangssignal der Kraftmeßeinrichtung so beeinflußt werden, daß Druckdifferenzen zwischen Führungs- und Meßgehäuse die Meßgenauigkeit der Einrichtung bzw. die Messung der Förderstärke nicht beeinträchtigen.

In Figur 2 ist eine Anpaßschaltung 31 dargestellt. Als Kraftmeßeinrichtung 8 ist schematisch eine Wägezelle WZ in Vollbrückenschaltung angedeutet, an der die Speisespannung ± U anliegt. Das Ausgangssignal der Wägezelle WZ wird auf einen Meßverstärker V geführt. In der Brückenschaltung sind Justagewiderstände $R_1$ und $R_2$ angeordnet. Als Differenzdruckaufnehmer 30 ist ein Aufnehmer P vorgesehen, der einen dem Differenzdruck $\Delta P$ proportionalen Widerstand $\Delta R$ aufweist. Der Aufnehmer ist parallel zum Justagewiderstand $R_2$ geschaltet. Mit der dargestellten Anordnung wird das Ausgangssignal der Wägezelle WZ so beeinflußt, daß Differenzdrücke $\Delta P$ zwischen Führungs- und Meßgehäuse 1, 10 keine Fehler an der Kraftmeßeinrichtung bzw. der Wägezelle WZ ergeben.

Eine weitere Möglichkeit zur Kompensation von Differenzdrücken zwischen Führungs- und Meßgehäuse besteht darin, die Ausgangssignale von Kraftmeßeinrichtung 8 und Differenzdruckaufnehmer 30 auf eine mikroprozessorgesteuerte Auswerteeinrichtung zu schalten, die durch einen Rechenalgorithmus den Druckeinfluß kompensiert.

Durchlaufmeßgerät für einen Schüttgutstrom in einem
geschlossenen System

Patentansprüche:

1. Durchlaufmeßgerät für einen Schüttgutstrom in einem
geschlossenen System, mit einem Führungsgehäuse für
den Schüttgutstrom, einer den Schüttgutstrom umlenkenden, innerhalb des Führungsgehäuses in Meßrichtung
beweglich angeordneten Meßfläche, einem Tragelement
zur Halterung der Meßfläche und zu ihrer Abstützung
auf einer Kraftmeßeinrichtung, Führungselementen zur
Parallelführung des Tragelements in Meßrichtung,
einem mit dem Führungsgehäuse verbundenen Meßgehäuse,
in dem die Führungselemente und die Kraftmeßeinrichtung angeordnet sind, sowie einer Abdichtung der
Durchführung des Tragelements zwischen Führungs- und
Meßgehäuse, dadurch gekennzeichnet, daß eine Membran
(20) zur elastischen Verbindung des Tragelements (4)
mit dem Meßgehäuse (10) und zurhermetischen Abdichtung des Führungsgehäuses (1) gegenüber dem Meßgehäuse (10) zwischen Tragelement (4) und Meßgehäuse
(10) angeordnet ist, und daß zur Kompensation des
auf die Membran (20) und das Tragelement (4) wirkenden Differenzdruckes zwischen Führungs- und Meßgehäuse (1, 10) mechanische oder elektrische Mittel
vorgesehen sind, die in der Weise auf die Kraftmeßeinrichtung (8) einwirken, daß ein Differenzdruck
zwischen Führungs- und Meßgehäuse (1, 10) das Meßsignal der Kraftmeßeinrichtung (8) nicht beeinflußt.

2. Durchlaufmeßgerät nach Anspruch 1, dadurch gekennzeichnet, daß am Meßgehäuse (10) eine vom Druck im Führungsgehäuse (1) beaufschlagte zweite Membran (21) angeordnet ist, und daß die zweite Membran (21) über Gestänge (11) und Umlenkelemente (12) auf das Tragelement (4) oder die Kraftmeßeinrichtung (8) wirkt.

3. Durchlaufmeßgerät nach Anspruch 2, dadurch gekennzeichnet, daß an der zweiten Membran (21) eine in Meßrichtung (6) wirkende Stange (11) angeordnet ist, daß die Stange (11) mit einem Hebelarm eines doppelarmigen, am Meßgehäuse (10) angeordneten Umlenkhebel (12) gelenkig verbunden ist und daß der andere Hebelarm des Umlenkhebels (12) über Verbindungselemente (13) mit dem Tragelement (4) oder der Kraftmeßeinrichtung (8) gelenkig verbunden ist.

4. Durchlaufmeßgerät nach Anspruch 2 oder 3, dadurch gekennzeichnet, daß die zweite Membran (21) den gleichen wirksamen Durchmesser aufweist wie die Membran (20) zwischen Tragelement (4) und Meßgehäuse (10).

5. Durchlaufmeßgerät nach Anspruch 1, dadurch gekennzeichnet, daß zwischen Führungs- und Meßgehäuse (1, 10) ein Differenzdruckaufnehmer (30) angeordnet ist, dessen Ausgangssignal das Meßsignal der Kraftmeßeinrichtung (8) beeinflußt.

6. Durchlaufmeßgerät nach Anspruch 5, dadurch gekennzeichnet, daß das Ausgangssignal des Differenzdruckaufnehmers (30) und das Ausgangssignal der Kraftmeßeinrichtung (8) in einer Anpaßschaltung (31) zusammengeführt sind, deren Ausgangssignal das korrigierte Meßsignal der Kraftmeßeinrichtung (8) darstellt.

Fig 1

0171439

$$\underline{\triangle R \sim \triangle P}$$

*Fig 2*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| | | - | G 01 F 1/30 |
| Y | DE-C-3 149 715 (ENDRESS U. HAUSER GmbH) * Figuren * | 1 | G 01 F 15/02 |
| Y | US-A-3 097 536 (S.R. YOUNG) * Figur; Spalte 1, Zeilen 8-40 * | 1 | |
| A | | 2,4 | |
| A | DE-A-2 412 258 (BARTEN u.a.) * Figuren * | | |
| A | US-A-2 872 074 (BIRTWELL u.a.) * Figur 1 * | 1 | |
| A | US-A-3 965 734 (WARD u.a.) * Figuren * | 1,5,6 | **RECHERCHIERTE SACHGEBIETE (Int Cl 4)**<br><br>G 01 F<br>G 01 G |
| A | US-A-2 804 771 (BROWN) * Figuren; Spalte 1, Zeile 60 - Spalte 2, Zeile 23 * | 1,5 | G 01 L<br>G 05 D |
| A | DE-A-1 773 701 (SHIBA, KAMEKICHI) * Figuren; Seite 11, Beispiel 1 u.s.w. * | 1,5,6 | |

Der vorliegende Recherchenbericht wurde für alle Patentansprüche erstellt

| Recherchenort | Abschlußdatum der Recherche | Prüfer |
|---|---|---|
| DEN HAAG | 21-02-1985 | NUIJTEN E.M. |